# EUROPÄISCHE PATENTANMELDUNG

(11) **EP 2 876 324 A2**
(43) Veröffentlichungstag der Anmeldung: **27.05.2015**
(21) Anmeldenummer: 14190982.0
(22) Anmeldetag: 30.10.2014
(51) Int. Cl.: F16D 25/08, F16D 23/14, F16D 48/02

(54) **Ausrückvorrichtung**

(30) Priorität: 22.11.2013 DE 102013223871; 14.04.2014 DE 102014207079; 15.04.2014 DE 102014207267
(71) Anmelder: Schaeffler Technologies AG & Co. KG, 91074 Herzogenaurach (DE)
(72) Erfinder: Guldenschuh, Dominik, 79115 Freiburg (DE); Honselmann, Sebastian, 77886 Lauf (DE)

(57) **Zusammenfassung**

Die Erfindung betrifft eine Ausrückvorrichtung mit einem axial verlagerbaren Ausrücklager insbesondere zur Beaufschlagung eines Betätigungselements einer Kupplung, wobei das Ausrücklager einen ersten Lagerring und einen zweiten Lagerring aufweist, wobei der erste Lagerring zur Beaufschlagung des Betätigungselements dient und der zweite Lagerring zur axialen Verlagerung des Ausrücklagers von einem ersten Betätigungsmittel und von einem zweiten Betätigungsmittel beaufschlagbar ist, wobei die beiden Betätigungsmittel unabhängig voneinander ansteuerbar sind, wobei das erste Betätigungsmittel zumindest eine erste Kolben-Zylindereinheit aufweist, wobei jede erste Kolben-Zylindereinheit einen ersten Zylinder aufweist, in welchem ein axial verlagerbarer erster Kolben aufgenommen ist, wobei der zweite Lagerring mittels des zumindest einen ersten Kolbens der zumindest einen ersten Kolben-Zylindereinheit beaufschlagbar ist und wobei das zweite Betätigungsmittel zumindest eine zweite Kolben-Zylindereinheit aufweist, wobei jede zweite Kolben-Zylindereinheit einen zweiten Zylinder aufweist, in welchem ein axial verlagerbarer zweiter Kolben aufgenommen ist, wobei der zweite Lagerring mittels des zumindest einen zweiten Kolbens der zumindest einen zweiten Kolben-Zylindereinheit beaufschlagbar ist.

## Beschreibung

Die Erfindung betrifft eine Ausrückvorrichtung, insbesondere zum Ausrücken einer Kupplung.

Ausrückvorrichtungen sind im Stand der Technik in verschiedenen Bauformen bekannt geworden. Dabei werden heute Ausrückvorrichtungen für Kupplungen eingesetzt, die durch ein verlagerbares Ausrücklager auf- oder zugedrückt werden. Im Stand der Technik sind hydraulisch betätigte Ausrückvorrichtungen oder mechanisch betätigte Ausrückvorrichtungen bekannt.

Bei hydraulisch betätigbaren Ausrückvorrichtungen weist die Vorrichtung einen Nehmerzylinder auf, welcher mit einer Fluidleitung mit einem Geberzylinder oder einer Hydraulikpumpe verbindbar ist. Daher wird auf das Nehmer- und Geber-System verwiesen, es kann statt Geberzylinder aber auch immer eine Pumpe vorhanden sein. Durch ein Betätigen eines Kupplungspedals wird der Kolben des Kupplungsgeberzylinders eingefahren, wodurch das in dem Geberzylinder und in dem restlichen System vorhandene Fluid durch das Leitungssystem gedrückt wird und somit ein Ausfahren des Kolbens des Kupplungsnehmerzylinders bewirkt wird. Der Kolben des Kupplungsnehmerzylinders drückt somit mit dem vorgesehenen insbesondere integrierten Ausrücklager auf die Tellerfeder der Kupplung. Durch diesen Vorgang wird die Kupplung aus- oder eingerückt bzw. geöffnet oder geschlossen und der Kraftfluss zwischen Motor und Getriebe wird dadurch unterbrochen oder hergestellt. Durch die Unterbrechung des Kraftflusses ist beispielsweise das Einlegen einer anderen Gangstufe oder der Neutralstellung im Getriebe möglich. Nach dem Einlegen der gewünschten Gangstufe kann der Fahrer das Kupplungspedal entlasten und es somit zurück in seine Ausgangsposition fahren lassen. Sobald der Fahrer den Druck auf das Pedal reduziert, kann durch den Gegendruck der in der Kupplung verbauten Tellerfeder das Ausrücklager und somit der Kolben des Kupplungsnehmerzylinders zurück in die Ausgangsposition gedrückt werden. Durch diesen Vorgang wird der Druck der Tellerfeder durch das im System vorhandene Fluid auf den Kolben des Kupplungsgeberzylinders übertragen. Dadurch fährt dieser ebenfalls gleichzeitig in seine Ausgangsposition zurück und drückt dadurch das Kupplungspedal in seine Ausgangstellung.

Durch diese Vorrichtungen nach dem Stand der Technik ergeben sich in manchen Fahrsituationen Komfortnachteile für den Fahrer des Fahrzeugs. Bei einem vergleichbaren Automatikgetriebefahrzeug muss der Fahrer nur den Fuß von der Bremse nehmen, damit das Fahrzeug anrollt und die Bremse wieder betätigen, damit das Fahrzeug wieder zum Stillstand kommt. Bei einem Fahrzeug mit Schaltgetriebe muss zusätzlich die Kupplung bei jedem Anfahren bzw. Anhalten manuell, also per Fuß, ein- oder ausgerückt werden. So muss zum Beispiel in Stausituationen bei ständigem "stop and go"-Verkehr die Kupplung immer wieder manuell betätigt werden, um mit dem Fahrzeug ein Stück weiter fahren zu können. Auch das Anfahren an bergaufführenden Fahrbahnabschnitten wird durch das manuelle Betätigen der Kupplung im Vergleich zu einem Automatikgetriebefahrzeug erschwert. Hier wird ein gewisses "Spiel" mit der Kupplung sowie eine gewisse Gaspedalanforderung an den Motor benötigt, um ruckfrei und flüssig anfahren zu können.

Es ist die Aufgabe der Erfindung, eine Ausrückvorrichtung zu schaffen, welche es erlaubt, dass die oben genannten Komfortnachteile zumindest teilweise kompensiert werden können.

Die Aufgabe der Erfindung wird mit den Merkmalen von Anspruch 1 gelöst.

Ein Ausführungsbeispiel der Erfindung betrifft eine Ausrückvorrichtung mit einem axial verlagerbaren Ausrücklager insbesondere zur Beaufschlagung eines Betätigungselements einer Kupplung, wobei das Ausrücklager einen ersten Lagerring und einen zweiten Lagerring aufweist, wobei der erste Lagerring zur Beaufschlagung des Betätigungselements dient und der zweite Lagerring zur axialen Verlagerung des Ausrücklagers von einem ersten Betätigungsmittel und von einem zweiten Betätigungsmittel beaufschlagbar ist, wobei die beiden Betätigungsmittel unabhängig voneinander ansteuerbar sind, wobei das erste Betätigungsmittel zumindest eine erste Kolben-Zylindereinheit aufweist, wobei jede erste Kolben-Zylindereinheit einen ersten Zylinder aufweist, in welchem ein axial verlagerbarer erster Kolben aufgenommen ist, wobei der zweite Lagerring mittels des zumindest einen ersten Kolbens der zumindest einen ersten Kolben-Zylindereinheit beaufschlagbar ist und wobei das zweite Betätigungsmittel zumindest eine zweite Kolben-Zylindereinheit aufweist, wobei jede zweite Kolben-Zylindereinheit einen zweiten Zylinder aufweist, in welchem ein axial verlagerbarer zweiter Kolben aufgenommen ist, wobei der zweite Lagerring mittels des zumindest einen zweiten Kolbens der zumindest einen zweiten Kolben-Zylindereinheit beaufschlagbar ist. Dadurch sind vorteilhaft zumindest zwei unabhängige Kolben-Zylindereinheiten oder zwei Gruppen von Kolben-Zylindereinheiten vorgesehen, mittels welchen automatisiert oder pedalbetätigt, also manuell, die Kupplung ausrückbar ist.

Dabei ist es besonders vorteilhaft, wenn das erste Betätigungsmittel eine Mehrzahl von ersten Kolben-Zylindereinheiten aufweist, wobei jede erste Kolben-Zylindereinheit einen ersten Zylinder aufweist, in welchem ein axial verlagerbarer erster Kolben aufgenommen ist, wobei der zweite Lagerring mittels der ersten Kolben der ersten Kolben-Zylindereinheiten beaufschlagbar ist. Damit ist eine erste Gruppe von Kolben-Zylindereinheiten definiert, welche vorteilhaft in einer Betriebsart gleichzeitig verwendet werden, um die Kupplung auszurücken.

Auch ist es vorteilhaft, wenn das erste Betätigungsmittel eine Mehrzahl von zweiten Kolben-Zylindereinheiten aufweist, wobei jede zweite Kolben-Zylindereinheit einen zweiten Zylinder aufweist, in welchem ein axial verlagerbarer zweiter Kolben aufgenommen ist, wobei der zweite Lagerring mittels der zweiten Kolben der zweiten Kolben-Zylindereinheiten beaufschlagbar ist. Damit ist eine zweite Gruppe von Kolben-Zylindereinheiten definiert, welche vorteilhaft in einer alternativen Betriebsart gleichzeitig verwendet werden, um die Kupplung auszurücken.

Dabei ist es auch vorteilhaft, wenn die gleiche Anzahl von ersten und zweiten Kolben-Zylindereinheiten vorgesehen sind, wobei die ersten und die zweiten Kolben-Zylindereinheiten am Umfang der Ausrückvorrichtung verteilt und am Umfang abwechselnd angeordnet sind. Die Kolben-Zylindereinheiten der Gruppen wechseln sich in Umfangsrichtung ab, um eine gleichmäßigere Kraftverteilung zu bewirken.

Vorteilhaft ist es, wenn die ersten und/oder die zweiten Kolben-Zylindereinheiten als zylindrische Kolben-Zylindereinheiten mit einem kreisförmigen Querschnitt ausgebildet sind. Dies bewirkt eine einfache Fertigung, weil die Zylinder in dieser Gestaltung einfacher gebohrt oder gegossen werden können.

Auch ist es zweckmäßig, wenn die ersten Kolben-Zylindereinheiten und/oder die zweiten Kolben-Zylindereinheiten als kreisringsegmentförmige oder nierenförmige Kolben-Zylindereinheiten mit einem kreisringsegmentförmigen oder nierenförmigen Querschnitt ausgebildet sind. Dadurch kann eine verbesserte Krafteinleitung umgesetzt werden, weil die Kolben großflächiger ausgebildet sind.

Besonders vorteilhaft ist es, wenn vier, sechs oder acht Kolben-Zylindereinheiten vorgesehen sind, wobei zwei, drei oder vier erste Kolben-Zylindereinheiten und zwei, drei oder vier zweite Kolben-Zylindereinheiten vorgesehen sind, die jeweils abwechselnd am Umfang der Ausrückvorrichtung angeordnet sind. Dadurch wird die Krafteinleitung auf das Ausrücklager ebenso über den Umfang vergleichmäßigt.

Weiterhin ist es zweckmäßig, wenn die Zylinder der ersten Kolben-Zylindereinheiten mittels Fluidverbindungen miteinander kurzgeschlossen sind und/oder dass die Zylinder der zweiten Kolben-Zylindereinheiten mittels Fluidverbindungen miteinander kurzgeschlossen sind. Dadurch wird erreicht, dass die Kolben-Zylindereinheiten einer Gruppe zeitgleich das Ausrücklager betätigen.

Auch ist es vorteilhaft, wenn die ersten Kolben-Zylindereinheiten und die zweiten Kolben-Zylindereinheiten auf gleichem Radius angeordnet sind. Dadurch wird eine bevorzugte bauraumsparende Bauweise bewirkt.

Die vorliegende Erfindung wird nachfolgend anhand bevorzugter Ausführungsbeispiele in Verbindung mit den zugehörigen Figuren näher erläutert:

Dabei zeigen:
- Fig. 1: eine perspektivische Ansicht eines ersten Ausführungsbeispiels einer Ausrückvorrichtung,
- Fig. 2: eine Schnittansicht der Ausrückvorrichtung nach Figur 1,
- Fig. 3: eine weitere Schnittansicht der Ausrückvorrichtung nach Figur 1,
- Fig. 4: eine Ansicht in das Gehäuse der Ausrückvorrichtung,
- Fig. 5: eine Ansicht in das Gehäuse der Ausrückvorrichtung,
- Fig. 6: eine Ansicht in das Gehäuse der Ausrückvorrichtung,
- Fig. 7: eine Ansicht in das Gehäuse der Ausrückvorrichtung,
- Fig. 8: eine perspektivische Ansicht eines ersten Ausführungsbeispiels einer Ausrückvorrichtung,
- Fig. 9: eine Schnittansicht der Ausrückvorrichtung nach Figur 8,
- Fig. 10: eine weitere Schnittansicht der Ausrückvorrichtung nach Figur 8,
- Fig. 11: eine Ansicht in das Gehäuse der Ausrückvorrichtung,
- Fig. 12: eine Ansicht in das Gehäuse der Ausrückvorrichtung,
- Fig. 13: eine Ansicht in das Gehäuse der Ausrückvorrichtung, und
- Fig. 14: eine Ansicht in das Gehäuse der Ausrückvorrichtung.

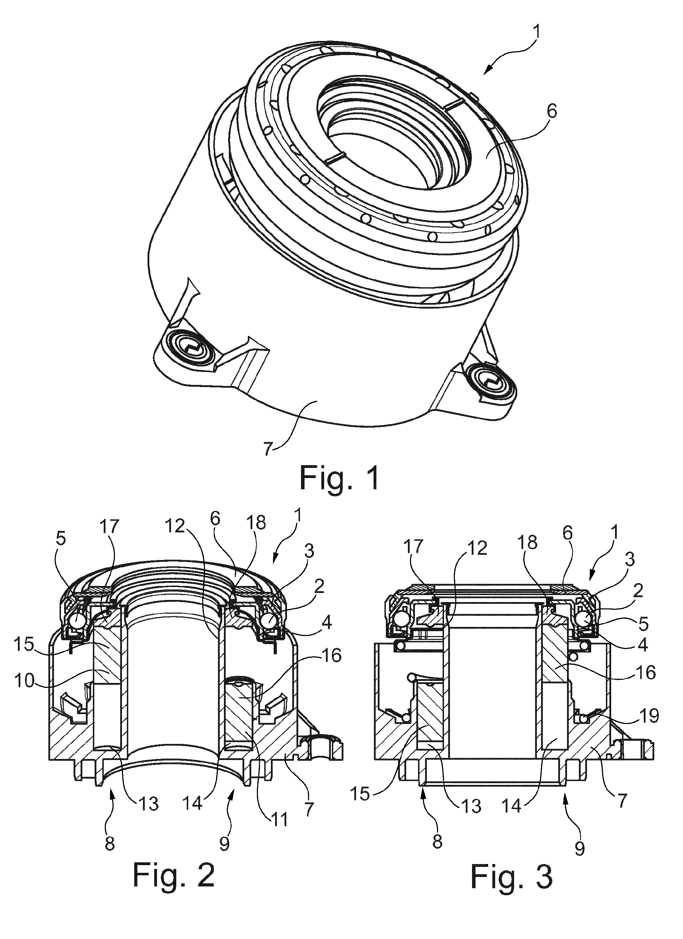

Die Fig. 1 bis 7 zeigen in verschiedenen Darstellungen ein erstes Ausführungsbeispiel einer erfindungsgemäßen Ausrückvorrichtung 1.

Die Ausrückvorrichtung 1 weist ein axial verlagerbares Ausrücklager 2 auf, welches insbesondere der Beaufschlagung eines Betätigungselements einer Kupplung dient. Durch die axiale Verlagerung des Ausrücklagers 2 kann eine Kupplung ein- bzw. ausgerückt werden. Dazu weist das Ausrücklager 2 einen ersten Lagerring 3 und einen zweiten Lagerring 4 auf. Der erste Lagerring 3 als Lageraußenring ausgebildet und der zweite Lagerring 4 ist als Lagerinnenring ausgebildet, wobei zwischen dem ersten Lagerring 3 und dem zweiten Lagerring 4 Wälzelemente 5 angeordnet sind, um den ersten Lagerring 3 relativ zum zweiten Lagerring 4 verdrehbar zu gestalten.

Der erste Lagerring 3 dient der Beaufschlagung eines Betätigungselements, beispielsweise einer Kupplung, während der zweite Lagerring 4 zur axialen Verlagerung des Ausrücklagers 2 herangezogen wird. Der erste Lagerring 3 kann von einem deckelartigen Element 6 abgedeckt werden, so dass die Betätigungselemente der Kupplung über dieses deckelartige Element 6 von dem ersten Lagerring 3 beaufschlagt werden kann.

Das Ausrücklager 2 ist in einem Gehäuse 7 aufgenommen, innerhalb welchem das Ausrücklager 2 in axialer Richtung verlagerbar ist. Das Gehäuse 7 weist gemäß der Fig. 2 bis 7 zwei Gruppen 8, 9 von Kolben-Zylindereinheiten 10, 11 auf.

Die Kolben-Zylindereinheiten 10, 11 der Gruppen 8, 9 von Kolben-Zylindereinheiten sind dabei bevorzugt jeweils zylindrisch ausgebildet und sie sind am Umfang der Führungshülse 12 des Gehäuses 7 verteilt angeordnet. Die Kolben-Zylindereinheiten 10 und die Kolben-Zylindereinheiten 11 sind dabei im Wesentlichen auf gleichem Radius angeordnet. Bevorzugt sind die Gruppen 8,9 derart ausgestaltet bzw. die Kolben-Zylindereinheiten 10, 11 der Gruppen 8, 9 derart angeordnet, dass sie sich am Umgang der Hülse bzw. der Ausrückvorrichtung abwechseln.

Jede der beiden Kolben-Zylindereinheiten 10, 11 weist einen Zylinder 13, 14, einen Kolben 15, 16 und ggf. ein Dichtelement auf, welches am Kolben den Zylinderraum abdichtet.

Wird im Zylinder 13 ein Druckmittel beaufschlagt, so wird der Kolben 15 in axialer Richtung verlagert, wobei der Kolben 15 an seinem einen zylinderseitigen Ende einen Druckraum oder ein Druckelement 17 beaufschlagt, welches an seinem gegenüberliegenden Ende den Lagerinnenring 4 beaufschlagt. Bei Verlagerung des Kolbens 15 in axialer Richtung wird der Lagerinnenring 4 in axialer Richtung verlagert, so dass das Ausrücklager 2 ebenso in axialer Richtung verlagert wird.

Wird im Zylinder 14 ein Druckmittel beaufschlagt, so wird der Kolben 16 in axialer Richtung verlagert, wobei der Kolben 16 an seinem einen zylinderseitigen Ende einen Druckraum oder ein Druckelement 18 beaufschlagt, welches an seinem gegenüberliegenden Ende den Lagerinnenring 4 beaufschlagt. Bei Verlagerung des Kolbens 16 in axialer Richtung wird der Lagerinnenring 4 in axialer Richtung verlagert, so dass das Ausrücklager 2 ebenso in axialer Richtung verlagert wird.

So kann entweder durch Beaufschlagung der Kolben-Zylindereinheiten der Gruppe 8 oder der Kolben-Zylindereinheiten der Gruppe 9 das Ausrücklager 2 betätigt werden und damit die Kupplung betätigt werden. Damit stehen zwei autarke Systeme zur Betätigung der Kupplung vor, die in dem Gehäuse 7 angeordnet sind und die im Wesentlichen den gleichen Bauraum einnehmen, wie eine übliche Ausrückvorrichtung mit nur einer Koben-Zylindereinheit für die Pedalbetätigung.

Das Gehäuse 7 weist eine Mehrzahl von kolben-Zylindereinheiten auf, die über einen Druckmittelanschluss mit Druckmittel versorgbar sind. Dabei kann es vorteilhaft sein, wenn die Kolben-Zylindereinheiten der jeweiligen Gruppe 8, 9 fluidverbunden sind und über jeweils eine Fluidleitung jeweils gemeinsam mit Druckmittel versorgbar sind. So kann am Gehäuse nur jeweils ein Fluidanschluss für die jeweilige Gruppe von Kolben-Zylindereinheiten vorgesehen sein.

Die jeweilige Kolben-Zylindereinheit 10, 11 weist einen Zylinder 13, 14 und einen Kolben 15, 16 auf, wobei der Zylinder 13, 14 durch einen Dichtring, welcher von einem weiteren Ring aufgenommen wird, abgedichtet ist, wobei über diesem weiteren Ring der Kolben angeordnet ist, welcher durch das Gehäuse 7 geführt wird. Mittels des Kolbens 15, 16 wird das Ausrücklager 2 betätigt. Das Ausrücklager 2 wird durch eine Feder 19 vorgespannt, die ebenfalls im Gehäuse 7 angeordnet ist und welche radial außen der Kolben-Zylindereinheiten angeordnet ist.

Findet nun eine Druckerhöhung durch Drücken des Kupplungspedals im Zylinder 13 statt, so fährt der Kolben 15 ein Stück aus dem Gehäuse 7 heraus und drückt somit über das Ausrücklager 2 auf die Tellerfeder der Kupplung, wodurch diese ausgerückt wird. Mindert der Fahrer den Druck auf das Kupplungspedal, wird der Kolben 15 durch die Gegenkraft der Tellerfeder zurück in das Gehäuse 7 gedrückt. Die Kupplung schließt wieder und das Fluid strömt aus dem Zylinder 13 im Gehäuse 7 hinaus zurück in das Leitungssystem bzw. zurück in den Kupplungsgeberzylinder. Dieser überträgt diese Rückstellkraft der Tellerfeder auf das Kupplungspedal, wodurch der vom Fahrer bemerkbare Gegendruck herrührt und wodurch das Pedal in seine Ausgangsposition zurück gestellt wird.

Wie in den Figuren 1 bis 3 zu erkennen ist, liegt zwischen den Elementen 17 und 18 als Druckelemente einerseits und den Kolben 15, 16 andererseits keine feste Verbindung vor, so dass die Druckelemente 17, 18 mit dem Ausrücklager 2 verbindbar sind und die Kolben 15, 16 die Druckelemente 17, 18 beaufschlagen, wenn sie axial verlagert werden.

Durch das Trennen bzw. Nichtvorliegen dieser Bauteilverbindung zwischen Druckelement und Kolben kann das Ausrücklager 2 entlang der Führungshülse 12 am Gehäuse 7 vom automatisierten System verschoben werden, ohne dass eine Druckänderung im Zylinder 13 des manuellen Systems oder allgemein im Ausrücksystem vorhanden sein muss.

Im den gezeigten Ausführungsbeispiel der Figuren 1 bis 7 sind insgesamt sechs Kolben-Zylindereinheiten 10, 11 verbaut, jeweils drei für jede Gruppe 8, 9. Alternativ können auch mehr oder weniger Kolben-Zylindereinheiten 10, 11 je Gruppe integriert werden.

Die Kolben-Zylindereinheiten mit ihren Zylindern und Kolben sind bevorzugt zylinderförmig ausgebildet. Daher müssen diese nicht gegen das Verdrehen in ihrer Führung gesichert werden, was eine Vereinfachung der Bauteile mit sich bringt.

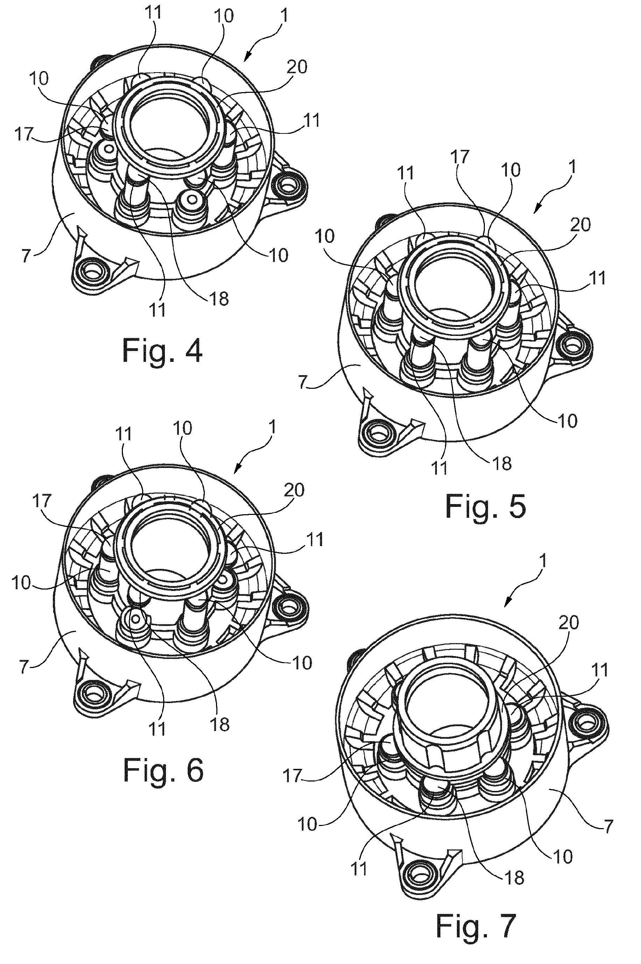

In Figur 4 ist zu erkennen, dass die Druckelemente 17, 18 an einem Ring 20 vorgesehen sind und gemeinsam axial verlagert werden.

Die Figuren 4 bis 7 zeigen verschiedene Betätigungszustände des Ausrücklagers bzw. der Kolben-Zylindereinheiten. Dabei sind die Kolben-Zylindereinheiten 10 bzw. 11 betätigt und die Druckelemente 17 bzw. 18 ragen vor.

In Figur 4 sind die Kolben-Zylindereinheiten 11 betätigt, während die Kolben-Zylindereinheiten 10 nicht betätigt sind. Die Kolben der Kolben-Zylindereinheiten 11 stehen in axialer Richtung nach oben vor und die Kolben der Kolben-Zylindereinheiten 10 sind zurückgezogen. Die Kupplung wird mittels der Kolben-Zylindereinheiten 11 betätigt.

In Figur 5 sind die Kolben-Zylindereinheiten 10 betätigt, während auch die Kolben-Zylindereinheiten 11 betätigt sind. Die Kolben der Kolben-Zylindereinheiten 10 stehen in axialer Richtung nach oben vor, wie auch die Kolben der Kolben-Zylindereinheiten 11 vorstehen. Die Kupplung wird mittels der Kolben-Zylindereinheiten 11 und 10 betätigt.

In Figur 6 sind die Kolben-Zylindereinheiten 10 betätigt, während die Kolben-Zylindereinheiten 11 nicht betätigt sind. Die Kolben der Kolben-Zylindereinheiten 10 stehen in axialer Richtung nach oben vor und die Kolben der Kolben-Zylindereinheiten 11 sind zurückgezogen. Die Kupplung wird mittels der Kolben-Zylindereinheiten 10 betätigt.

In Figur 7 sind weder die Kolben-Zylindereinheiten 10 noch die Kolben der Kolben-Zylindereinheiten 11 betätigt. Die Kolben der Kolben-Zylindereinheiten 10 sind wie auch die Kolben der Kolben-Zylindereinheiten 11 zurückgezogen. Die Kupplung ist unbetätigt.

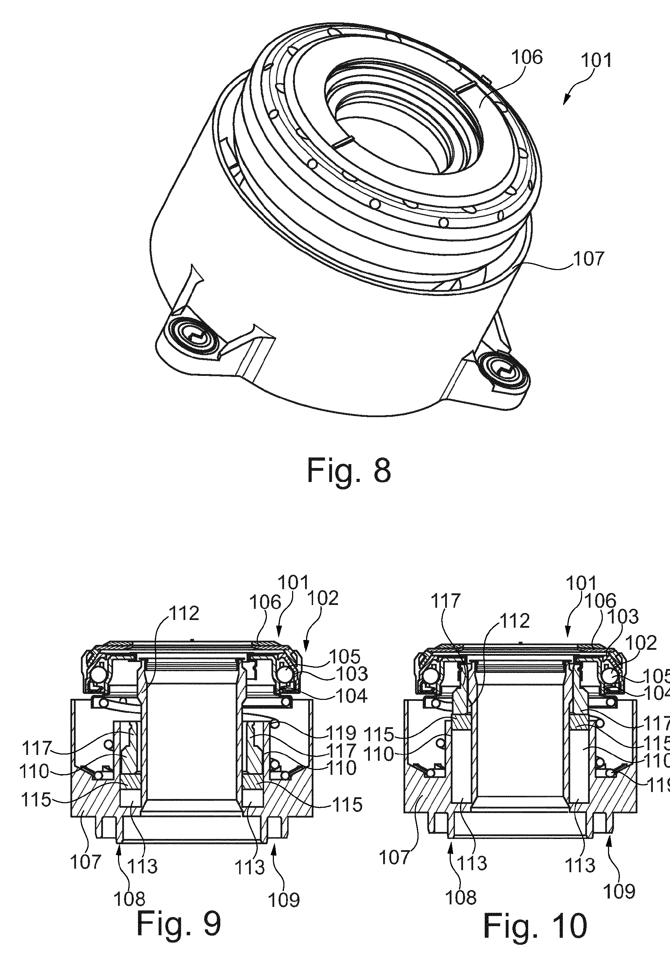

Die Fig. 8 bis 14 zeigen in verschiedenen Darstellungen ein weiteres zweites Ausführungsbeispiel einer erfindungsgemäßen Ausrückvorrichtung 101.

Die Ausrückvorrichtung 101 weist ein axial verlagerbares Ausrücklager 102 auf, welches insbesondere der Beaufschlagung eines Betätigungselements einer Kupplung dient. Durch die axiale Verlagerung des Ausrücklagers 102 kann eine Kupplung ein- bzw. ausgerückt werden. Dazu weist das Ausrücklager 102 einen ersten Lagerring 103 und einen zweiten Lagerring 104 auf. Der erste Lagerring 103 als Lageraußenring ausgebildet und der zweite Lagerring 104 ist als Lagerinnenring ausgebildet, wobei zwischen dem ersten Lagerring 103 und dem zweiten Lagerring 104 Wälzelemente 105 angeordnet sind, um den ersten Lagerring 103 relativ zum zweiten Lagerring 104 verdrehbar zu gestalten.

Der erste Lagerring 103 dient der Beaufschlagung eines Betätigungselements, beispielsweise einer Kupplung, während der zweite Lagerring 104 zur axialen Verlagerung des Ausrücklagers 102 herangezogen wird. Der erste Lagerring 103 kann von einem deckelartigen Element 106 abgedeckt werden, so dass die Betätigungselemente der Kupplung über dieses deckelartige Element 106 von dem ersten Lagerring 103 beaufschlagt werden kann.

Das Ausrücklager 102 ist in einem Gehäuse 107 aufgenommen, innerhalb welchem das Ausrücklager 102 in axialer Richtung verlagerbar ist. Das Gehäuse 107 weist gemäß der Fig. 9 bis 14 zwei Gruppen 108, 109 von Kolben-Zylindereinheiten 110, 111 auf.

Die Kolben-Zylindereinheiten 110, 111 der Gruppen 108, 109 von Kolben-Zylindereinheiten sind dabei bevorzugt jeweils kreisringsegmentförmig oder nierenförmig ausgebildet und sie sind am Umfang der Führungshülse 112 des Gehäuses 107 verteilt angeordnet. Die Kolben-Zylindereinheiten 110 und die Kolben-Zylindereinheiten 111 sind dabei im Wesentlichen auf gleichem Radius angeordnet. Bevorzugt sind die Gruppen 108, 109 derart ausgestaltet bzw. die Kolben-Zylindereinheiten 110, 111 der Gruppen 108, 109 derart angeordnet, dass sie sich am Umgang der Hülse 112 bzw. der Ausrückvorrichtung abwechseln.

Jede der beiden Kolben-Zylindereinheiten 110, 111 weist einen Zylinder 113, 114, einen Kolben 115, 116 und ggf. ein Dichtelement auf, welches am Kolben angeordnet den Zylinderraum abdichtet.

Wird im Zylinder 113 ein Druckmittel beaufschlagt, so wird der Kolben 115 in axialer Richtung verlagert, wobei der Kolben 115 an seinem einen zylinderseitigen Ende einen Druckraum oder ein Druckelement 117 beaufschlagt, welches an seinem gegenüberliegenden Ende den Lagerinnenring 104 beaufschlagt. Bei Verlagerung des Kolbens 115 in axialer Richtung wird der Lagerinnenring 104 in axialer Richtung verlagert, so dass das Ausrücklager 102 ebenso in axialer Richtung verlagert wird.

Wird im Zylinder 114 ein Druckmittel beaufschlagt, so wird der Kolben 116 in axialer Richtung verlagert, wobei der Kolben 116 an seinem einen zylinderseitigen Ende einen Druckraum oder ein Druckelement beaufschlagt, welches an seinem gegenüberliegenden Ende den Lagerinnenring 104 beaufschlagt. Bei Verlagerung des Kolbens 116 in axialer Richtung wird der Lagerinnenring 104 in axialer Richtung verlagert, so dass das Ausrücklager 102 ebenso in axialer Richtung verlagert wird.

So kann entweder durch Beaufschlagung der Kolben-Zylindereinheiten der Gruppe 108 oder der Kolben-Zylindereinheiten der Gruppe 109 das Ausrücklager 102 betätigt werden und damit die Kupplung betätigt werden. Damit stehen zwei autarke Systeme zur Betätigung der Kupplung vor, die in dem Gehäuse 107 angeordnet sind und die im Wesentlichen den gleichen Bauraum einnehmen, wie eine übliche Ausrückvorrichtung mit nur einer Koben-Zylindereinheit für die Pedalbetätigung.

Das Gehäuse 107 weist eine Mehrzahl von Kolben-Zylindereinheiten auf, die über einen Druckmittelanschluss mit Druckmittel versorgbar sind. Dabei kann es vorteilhaft sein, wenn die Kolben-Zylindereinheiten der jeweiligen Gruppe 108, 109 fluidverbunden sind und über jeweils eine Fluidleitung jeweils gemeinsam mit Druckmittel versorgbar sind. So kann am Gehäuse 107 nur jeweils ein Fluidanschluss für die jeweilige Gruppe von Kolben-Zylindereinheiten vorgesehen sein.

Die jeweilige Kolben-Zylindereinheit 110, 111 weist einen Zylinder 113, 114 und einen Kolben 115, 116 auf, wobei der Zylinder 113, 114 durch einen Dichtring oder ein Dichtelement abgedichtet ist, wobei über diesem Dichtelement der Kolben angeordnet ist, welcher durch das Gehäuse 107 geführt wird. Mittels des Kolbens 115, 116 wird das Ausrücklager 102 betätigt. Das Ausrücklager 102 wird durch eine Feder 119 vorgespannt, die ebenfalls im Gehäuse 7 angeordnet ist und welche radial außen der Kolben-Zylindereinheiten angeordnet ist.

Findet nun eine Druckerhöhung durch Drücken des Kupplungspedals im Zylinder 113 statt, so fährt der Kolben 115 ein Stück aus dem Gehäuse 107 heraus und drückt somit über das Ausrücklager 102 auf die Tellerfeder der Kupplung, wodurch diese ausgerückt wird. Mindert der Fahrer den Druck auf das Kupplungspedal, wird der Kolben 115 durch die Gegenkraft der Tellerfeder zurück in das Gehäuse 107 gedrückt. Die Kupplung schließt wieder und das Fluid strömt aus dem Zylinder 113 im Gehäuse 107 hinaus zurück in das Leitungssystem bzw. zurück in den Kupplungsgeberzylinder. Dieser überträgt diese Rückstellkraft der Tellerfeder auf das Kupplungspedal, wodurch der vom Fahrer bemerkbare Gegendruck herrührt und wodurch das Pedal in seine Ausgangsposition zurück gestellt wird.

Wie in den Figuren 8 bis 10 zu erkennen ist, liegt zwischen den Elementen 117 als Druckelemente einerseits und den Kolben 115, 116 andererseits keine feste Verbindung vor, so dass die Druckelemente 117 mit dem Ausrücklager 102 verbindbar sind und die Kolben 115, 116 die Druckelemente 117, 118 beaufschlagen, wenn sie axial verlagert werden.

Durch das Trennen bzw. Nichtvorliegen dieser Bauteilverbindung zwischen Druckelement und Kolben kann das Ausrücklager 102 entlang der Führungshülse 112 am Gehäuse 107 vom automatisierten System verschoben werden, ohne dass eine Druckänderung im Zylinder 113 des manuellen Systems oder allgemein im Ausrücksystem vorhanden sein muss.

Im den gezeigten Ausführungsbeispiel der Figuren 8 bis 14 sind insgesamt vier Kolben-Zylindereinheiten 110, 111 verbaut, jeweils zwei für jede Gruppe 108, 109. Alternativ können auch mehr oder weniger Kolben-Zylindereinheiten 110, 111 je Gruppe 108, 109 integriert werden.

Die Kolben-Zylindereinheiten mit ihren Zylindern und Kolben sind bevorzugt kreisringsegmentförmig oder nierenförmig ausgebildet. Daher müssen diese nicht gegen das Verdrehen in ihrer Führung gesichert werden, was eine Vereinfachung der Bauteile mit sich bringt.

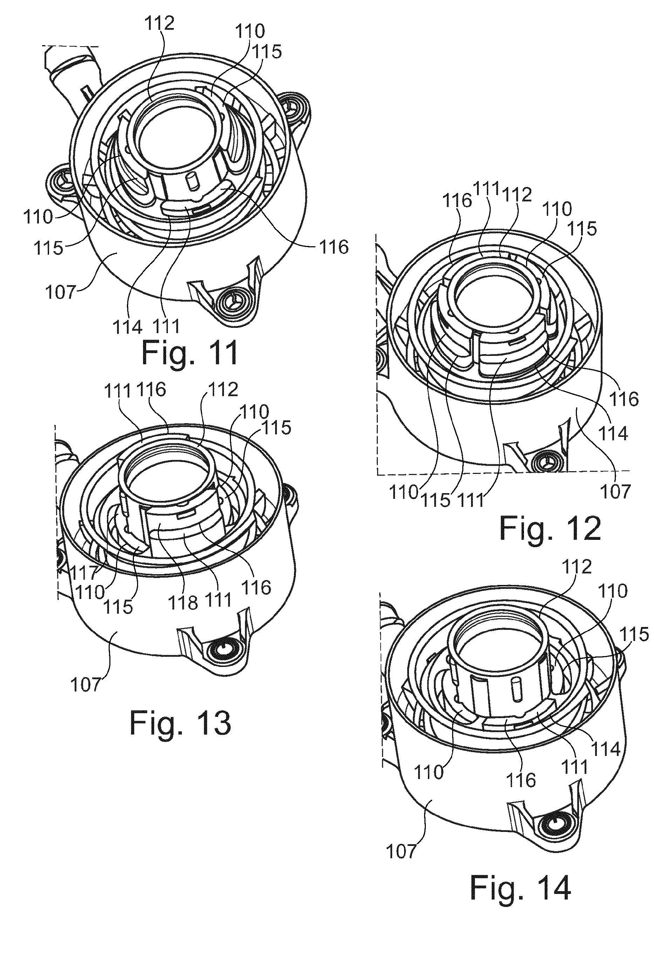

Die Figuren 11 bis 14 zeigen verschiedene Betätigungszustände des Ausrücklagers bzw. der Kolben-Zylindereinheiten. Dabei sind die Kolben-Zylindereinheiten 110 bzw. 11 betätigt und die Druckelemente 117 bzw. 118 ragen vor.

In Figur 11 sind die Kolben-Zylindereinheiten 110 betätigt, während die Kolben-Zylindereinheiten 111 nicht betätigt sind. Die Kolben der Kolben-Zylindereinheiten 110 stehen in axialer Richtung nach oben vor und die Kolben der Kolben-Zylindereinheiten 111 sind zurückgezogen. Die Kupplung wird mittels der Kolben-Zylindereinheiten 110 betätigt.

In Figur 12 sind die Kolben-Zylindereinheiten 110 betätigt, während auch die Kolben-Zylindereinheiten 111 betätigt sind. Die Kolben der Kolben-Zylindereinheiten 110 stehen in axialer Richtung nach oben vor, wie auch die Kolben der Kolben-Zylindereinheiten 111 vorstehen. Die Kupplung wird mittels der Kolben-Zylindereinheiten 111 und 110 betätigt.

In Figur 13 sind die Kolben-Zylindereinheiten 111 betätigt, während die Kolben-Zylindereinheiten 110 nicht betätigt sind. Die Kolben der Kolben-Zylindereinheiten 111 stehen in axialer Richtung nach oben vor und die Kolben der Kolben-Zylindereinheiten 110 sind zurückgezogen. Die Kupplung wird mittels der Kolben-Zylindereinheiten 111 betätigt.

In Figur 14 sind weder die Kolben-Zylindereinheiten 110 noch die Kolben der Kolben-Zylindereinheiten 111 betätigt. Die Kolben der Kolben-Zylindereinheiten 110 sind wie auch die Kolben der Kolben-Zylindereinheiten 111 zurückgezogen. Die Kupplung ist unbetätigt.

In den gezeigten Ausführungsbeispielen sind jeweils eine gewisse Anzahl erster und zweiter Kolben-Zylindereinheiten gezeigt. Dies stellt jedoch keine Beschränkung dar und es kann auch eine davon verschiedene Anzahl erster und zweiter Kolben-Zylindereinheiten vorgesehen sein.

### Bezugszeichenliste

- 1: Ausrückvorrichtung
- 2: Ausrücklager
- 3: erster Lagerring
- 4: zweiter Lagerring
- 5: Wälzelement
- 6: deckelartiges Element
- 7: Gehäuse
- 8: Gruppe
- 9: Gruppe
- 10: Kolben-Zylindereinheit
- 11: Kolben-Zylindereinheit
- 12: Führungshülse
- 13: Zylinder
- 14: Zylinder
- 15: Kolben
- 16: Kolben
- 17: Druckelement
- 18: Druckelement
- 19: Feder
- 20: Ring

- 101: Ausrückvorrichtung
- 102: Ausrücklager
- 103: erster Lagerring
- 104: zweiter Lagerring
- 105: Wälzelement
- 106: deckelartiges Element
- 107: Gehäuse
- 108: Gruppe
- 109: Gruppe
- 110: Kolben-Zylindereinheit
- 111: Kolben-Zylindereinheit
- 112: Führungshülse
- 113: Zylinder
- 114: Zylinder
- 115: Kolben
- 116: Kolben
- 117: Druckelement
- 118: Druckelement
- 119: Feder

## Patentansprüche

1. Ausrückvorrichtung (1,101) mit einem axial verlagerbaren Ausrücklager (2,102) insbesondere zur Beaufschlagung eines Betätigungselements einer Kupplung, wobei das Ausrücklager (2,102) einen ersten Lagerring (3,103) und einen zweiten Lagerring (4,104) aufweist, wobei der erste Lagerring zur Beaufschlagung des Betätigungselements dient und der zweite Lagerring zur axialen Verlagerung des Ausrücklagers von einem ersten Betätigungsmittel und von einem zweiten Betätigungsmittel beaufschlagbar ist, wobei die beiden Betätigungsmittel unabhängig voneinander ansteuerbar sind, wobei das erste Betätigungsmittel zumindest eine erste Kolben-Zylindereinheit (10,110) aufweist, wobei jede erste Kolben-Zylindereinheit (10,110) einen ersten Zylinder (13,113) aufweist, in welchem ein axial verlagerbarer erster Kolben (15,115) aufgenommen ist, wobei der zweite Lagerring mittels des zumindest einen ersten Kolbens (15,115) der zumindest einen ersten Kolben-Zylindereinheit (10,110) beaufschlagbar ist und wobei das zweite Betätigungsmittel zumindest eine zweite Kolben-Zylindereinheit (11,111) aufweist, wobei jede zweite Kolben-Zylindereinheit (11,111) einen zweiten Zylinder (14,114) aufweist, in welchem ein axial verlagerbarer zweiter Kolben (16,116) aufgenommen ist, wobei der zweite Lagerring mittels des zumindest einen zweiten Kolbens der zumindest einen zweiten Kolben-Zylindereinheit beaufschlagbar ist.

2. Ausrückvorrichtung nach Anspruch 1, **dadurch gekennzeichnet, dass** das erste Betätigungsmittel eine Mehrzahl von ersten Kolben-Zylindereinheiten (10,110) aufweist, wobei jede erste Kolben-Zylindereinheit (10,110) einen ersten Zylinder aufweist, in welchem ein axial verlagerbarer erster Kolben aufgenommen ist, wobei der zweite Lagerring mittels der ersten Kolben der ersten Kolben-Zylindereinheiten (10,110) beaufschlagbar ist.

3. Ausrückvorrichtung nach Anspruch 1 oder 2, **dadurch gekennzeichnet, dass** das zweite Betätigungsmittel eine Mehrzahl von zweiten Kolben-Zylindereinheiten (11,111) aufweist, wobei jede zweite Kolben-Zylindereinheit (11,111) einen zweiten Zylinder aufweist, in welchem ein axial verlagerbarer zweiter Kolben aufgenommen ist, wobei der zweite Lagerring mittels der zweiten Kolben der zweiten Kolben-Zylindereinheiten (11,111) beaufschlagbar ist.

4. Ausrückvorrichtung nach einem der vorhergehenden Ansprüche 1 bis 3, **dadurch gekennzeichnet, dass** die gleiche Anzahl von ersten und zweiten Kolben-Zylindereinheiten (10,11,110,111) vorgesehen sind, wobei die ersten und die zweiten Kolben-Zylindereinheiten (10,11,110,111) am Umfang der Ausrückvorrichtung verteilt und am Umfang abwechselnd angeordnet sind.

5. Ausrückvorrichtung nach einem der vorhergehenden Ansprüche, **dadurch gekennzeichnet, dass** die ersten und/oder die zweiten Kolben-Zylindereinheiten (10,11) als zylindrische Kolben-Zylindereinheiten (10,11) mit einem kreisförmigen Querschnitt ausgebildet sind.

6. Ausrückvorrichtung nach einem der vorhergehenden Ansprüche, **dadurch gekennzeichnet, dass** die ersten Kolben-Zylindereinheiten und/oder die zweiten Kolben-Zylindereinheiten (110,111) als kreisringsegmentförmige oder nierenförmige Kolben-Zylindereinheiten (110,111) mit einem kreisringsegmentförmige oder nierenförmige Querschnitt ausgebildet sind.

7. Ausrückvorrichtung nach einem der vorhergehenden Ansprüche, **dadurch gekennzeichnet, dass** vier, sechs oder acht Kolben-Zylindereinheiten (10,11,110,111) vorgesehen sind, wobei zwei, drei oder vier erste Kolben-Zylindereinheiten (10, 110) und zwei, drei oder vier zweite Kolben-Zylindereinheiten (11,111) vorgesehen sind, die jeweils abwechselnd am Umfang der Ausrückvorrichtung angeordnet sind.

8. Ausrückvorrichtung nach einem der vorhergehenden Ansprüche, **dadurch gekennzeichnet, dass** die Zylinder der ersten Kolben-Zylindereinheiten mittels Fluidverbindungen miteinander kurzgeschlossen sind und/oder dass die Zylinder der zweiten Kolben-Zylindereinheiten mittels Fluidverbindungen miteinander kurzgeschlossen sind

9. Ausrückvorrichtung nach einem der vorhergehenden Ansprüche, **dadurch gekennzeichnet, dass** die ersten Kolben-Zylindereinheiten und die zweiten Kolben-Zylindereinheiten (10,11,110,111) auf gleichem Radius angeordnet sind.
